# EUROPEAN PATENT SPECIFICATION

(11) **EP 0 646 482 B1**
(45) Date of publication and mention of the grant of the patent: **18.07.2001**
(21) Application number: 94830462.1
(22) Date of filing: 29.09.1994
(51) Int. Cl.: B60D 1/52, B60D 1/64

(54) **Removable trailer hook**
Abnehmbare Kupplungsstange
Dispositif d'attelage amovible

(30) Priority: 30.09.1993 IT RM930664
(43) Date of publication of application: 05.04.1995
(73) Proprietor: PLINI & GIGLIOTTI S.n.c., 00157 Roma (IT)
(72) Inventor: Plini, Piero, I-00157 Roma (IT); Gigliotti, Paolo, I-00157 Roma (IT)
(74) Representative: Zeitler & Dickel

(56) References cited:
- EP-A- 0 593 983
- CH-A- 275 045
- DE-C- 947 675
- DE-U- 6 911 648
- US-A- 4 348 035

## Description

The present invention relates to a removable trailer hook with a tube attached with mechanical devices to a vehicle and comprising a lug hook wherein at the bottom of the tube a contact-carrier is provided, which holds outlets for connection to the vehicle's electrical system, and wherein furthermore at the tube a contact-carrier is provided, which holds outlets for connection with a trailer's electrical system, according to the preamble of claim 1.

It is common knowledge that the use of trailer hooks has been growing among automobile drivers, who find themselves, with increasing frequency, needing to hook onto their vehicles boat trailers or other small-size trailers, campers or similar units.

The installation of fixed type hooks has been obsolete for some time now, given that they can pose a danger for unwary pedestrians who bump into the hook, as well as posing a threat in the event of collision; in addition, they mark the appearance of the vehicle. As a result, three has been a switch in recent years to removable hooks, today used on an almost exclusive basis and consisting of a lug hook which can be removed when not in use, thus eliminating any danger and minimizing the negative effect on the vehicle's appearance.

Removable trailer hook is described, for example, in the Swiss Patent CH 275 045, which deals with a purely mechanical means for hitching a trailer to the vehicle, whereby the pins located on a removable trailer engage with the guiding slots inside the tube which is integral with the vehicles, so as to achieve a bayonet joint, the Patent DE-U 6 911 648 deals with a removable trailer similar to the preceding one, whereby the trailer is coupled with or separated from the vehicle by means of a tube integral with the vehicle.

The US Patent 4,348,035 deals with a removable trailer hook consisting of a bar integral with the vehicle, another bar at the opposite end of a swiveling hitch for coupling with the trailer and mechanical means for locking the hitch and the bar.

All known removable trailer hook consist of detachable mechanical parts, which do not provide for the simultaneous removal, with a single action, of the electrical connection between the trailer and the vehicle.

The object of this invention is a removable trailer hook of the known type, similar to the one described in the Swiss Patent CH-A 275 045, which, however, also includes a plug and socket type connector enabling the simultaneous mechanical coupling of the trailer with the vehicle and the electrical connection between the plug, located in the tube integral with the vehicle, and the socket, integral with the detachable coupling, as well as the maintaining of the connection while the vehicle is running.

This type of the design is made necessary by the fact that recent model cars tend to come with increasingly low back bumpers which are of a piece with the base of the vehicle's trunk. Though such bumper spoilers improve the vehicle's aerodynamic performance, they represent a complication in terms of installing trailer hooks, at least as far as the portion holding the 7-pole socket is concerned. In the design dealt with in the present patent, the problem is solved by employing a bayonet joint for the mechanical portion and, for the electrical portion, by using a special contact-carrier block capable of following the movements resulting from the insertion and removal operations. This type of device can be referred to as a rapid disassembly and assembly hook: indeed, the entire operation requires only a few seconds of time. And in terms of the vehicle's appearance, no better solution can be found.

The removable trailer hook of the invention is characterized in that inside the tube are provided guide slots and on the lug hook are provided pins such that slots and pins act in combination as a bayonet joint between the lug hook and the tube, that along the sides of the contacting-carrier are provided grooves which, by means of specially designed pins on the tube, define a second bayonet joint for the contact-carrier, and that a counter spring is positioned between the bottom of the tube and the contact-carrier.

Inside the tube, at its bottom, is attached the male portion of the contact-carrier connected to the vehicle's electrical system; this contact-carrier is outfitted with grooves which allow it to follow the movements resulting from the insertion and removal of the lug hook. Attached to the end of the lug hook is the portion of the contact-carrier (female) which holds the connections to the trailer socket.

When the lug hook is inserted in the tube, the female contact carrier joins with the male contact-carrier, performing as mentioned earlier, the same movements as the lug hook during its insertion into the bayonet joint. In this way, the lug hook is inserted snugly into the tube, ensuring perfect contact between the male and the female plug, thanks in part to an elastic element, such as a counter spring, which is placed between the bottom of the tube and the male plug.

Following the insertion of the lug hook into the tube by means of the bayonet joint, the union of the two parts, meaning the tube and the lug hook, is further reinforced with an external ring-nut coupler. The external circumference of this ring nut presents a series of notches. Once the ring nut has been fully tightened, a hook on the spring-operated tap mounted on the tube attaches itself to the notching. The tap is meant to guarantee closure of the tube when the lug hook is removed, thus preventing dirt and grime from entering the tube, in addition to giving a finished look to the unit.

The brief illustration provided so far can be better understood by studying the detailed description which follows, making reference to the drawings in the appendices:

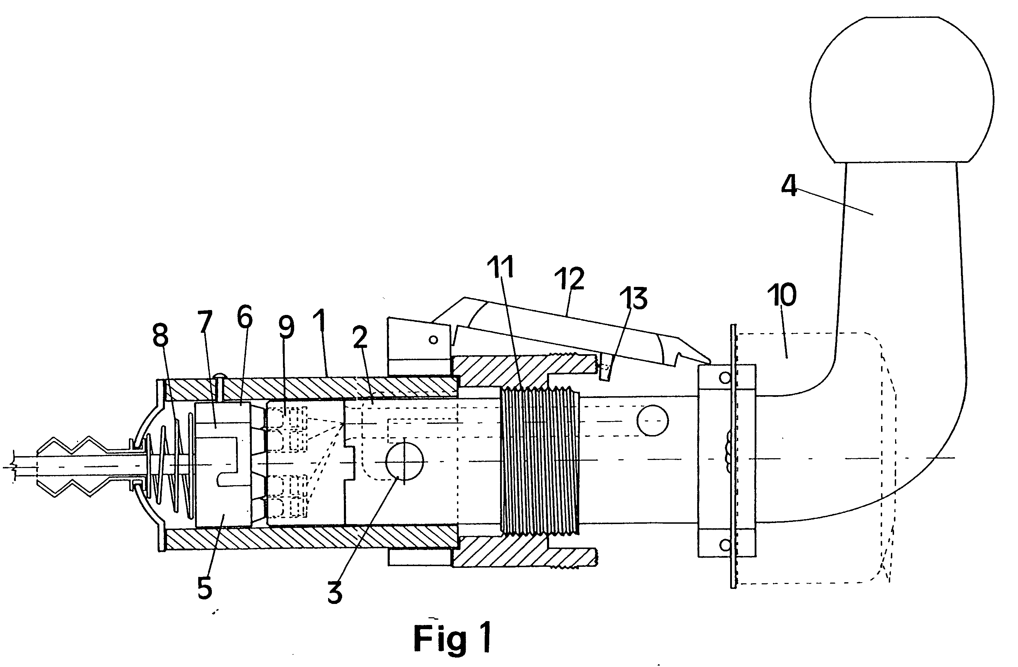

- Fig. 1: shows a cross-section of the hook dealt with in the present invention;

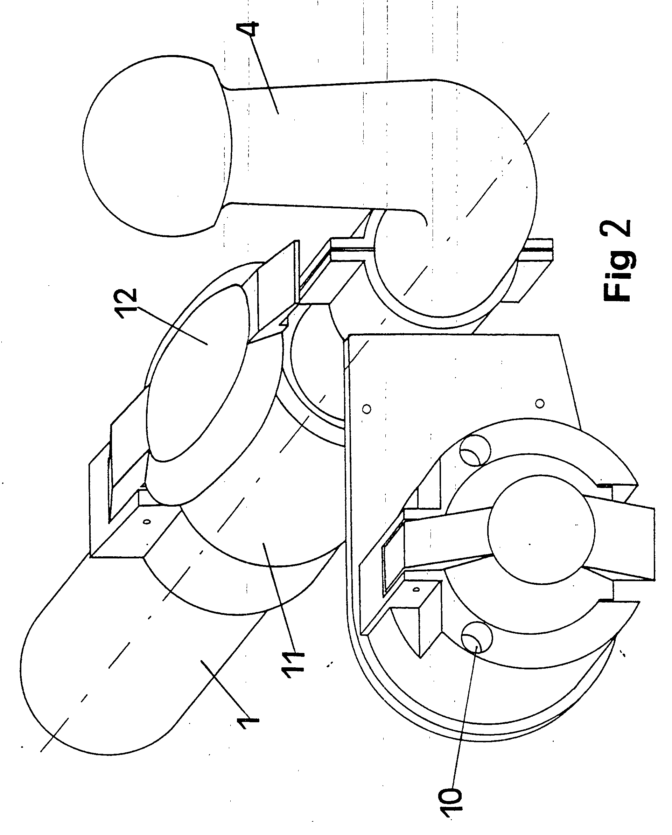

- Fig. 2: is an isometric drawing of the same device;

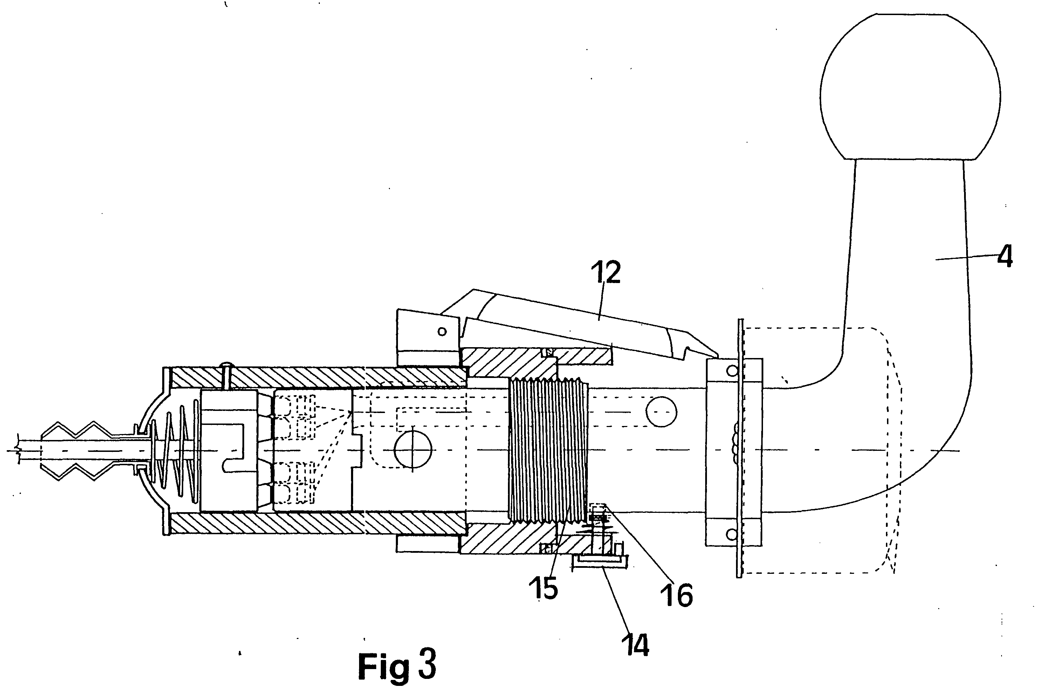

- Fig. 3: shows a cross-section of the hook featuring a variation on the safety catch;
- Fig. 4: shows a cross-section of the ring nut;
- Fig. 5: shows a top view of the safety catch in the inserted position;
- Fig. 6 and 7: show a cross-section of the safety catch in the inserted and disinserted positions, respectively.

In these drawings the hook dealt with in the present invention is shown to consist of a tube 1, attached with the standard devices to the vehicle; inside of the tube are guide-slots 2 into which the pins 3 on the lug hook are inserted, so as to create a bayonet joint between the tube and the lug hook.

Attached to the bottom of the tube is a contact-carrier (male) 5 outfitted with the seven plugs 6 which hold the wires of the vehicle's electrical system for connection to the contacts of the trailer's electrical system. Along the sides of the contact-carrier are grooves which, by means of specially designed pins on the tube, create a second bayonet joint for the contact-carrier 5; a counter spring 8 is positioned between the bottom of the tube 1 and the contact-carrier 5.

Housed in the end of the lug hook is the female portion 9 of the contact-carrier, which makes it possible, when the hook is inserted, to join the male contact-carrier 5 with the female contact-carrier 9, and, therefore, to ensure the power-feed to the plug 10 which supplies the connection to the trailer's electrical system.

The lug hook 4 is inserted and locked into the tube 1, as mentioned earlier, by means of a bayonet joint, and, once the lug hook 4 has been inserted in the tube 1, the male and female pins also connect, with the pin 5 guaranteeing a perfect seal of the contacts by following the movements of the lug hook 4 resulting from the insertion of the bayonet joint, this being made possible by the grooves 7, which as mentioned earlier, are present on the sides of the contact-carrier as well as by the corresponding between the two-contact-carriers even more effective and ensuring that they will remain inserted even in the event of intensive vibrations.

In order to render the connection between the tube 1 and the lug pipe 4 that much more solid, the design also includes a ring nut 11 which makes it possible to join the two parts with each other so as to distribute the stress generated by the hauling operation in a uniform manner along the entire tube 1. The closure of the ring nut is further reinforced by a spring-operated tap equipped with a safety catch which prevents the ring nut 11 from coming loose even when subjected to intensive vibrations.

When the hook assembly is not being used for hauling, the lug hook 4 can easily, and in just a few seconds, be disengaged, thanks to the bayonet joint described earlier; its removal also results in the automatic disconnection of the two contact-carriers 5 and 9. The tap 12 automatically positions itself, once the lug hook 4 has been removed, on the mouth of the tube, keeping dirt and grime from entering the tube itself and giving it a sufficiently finished appearance.

In a possible variation on the design, the safety catch 13 could be replaced with a spring-operated pin 14 housed on the ring nut 15; when in the safety position, this pin would insert itself in a hole 16 on the lug. Once inserted, the pin 16 prevents the ring nut from coming unscrewed.

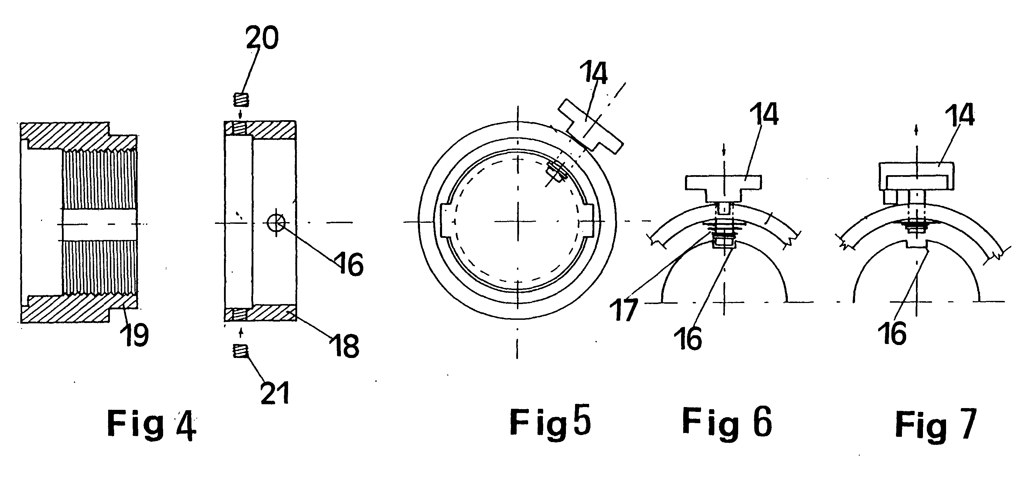

In order to free the ring nut, the pin 14 must be pulled to the outside, overcoming the resistance of the spring 17, as shown in Fig. 7, and rotated until it locks in the raised position. To block the ring nut, on the other hand, the pin 14 is rotated until it meets and enters the hole 16.

To make possible rapid insertion of the pin 4 in the hole, the ring nut 15 is divided into two sections 18 and 19.

To ensure that both the ring nut, at the end of its extension, and the safety pin coincide with the hole for the pin 16, centering should be performed during the assembly process by registering the position of section 18 of the ring nut.

Once the pin has been registered in the hole, portions 18 and 19 of the ring nut are once again joined into a single unit by tightening two worm screws or similar devices 20 and 21.

## Claims

1. Removable trailer hook with a tube (1) attached with mechanical devices to a vehicle and comprising a lug hook (4), wherein at the bottom of the tube (1) a contact-carrier (5) is provided, which holds outlets for connection to the vehicle's electrical system, and wherein furthermore at the tube (1) a contact-carrier (9) is provided, which holds outlets for connection with a trailer's electrical system,
**characterized in**
that inside the tube (1) are provided guide slots (2) and on the lug hook (4) are provided pins (3) such that slots (2) and pins (3) act in combination as a bayonet joint between the lug hook (4) and the tube (1),
that along the sides of the contact-carrier (5) are provided grooves (7) which, by means of specially designed pins on the tube (1), define a second bayonet joint for the contact-carrier (5), and
that a counter spring (8) is positioned between the bottom of the tube (1) and the contact-carrier (5).

2. Trailer hook according to claim 1, characterized in that a ring nut (11) is provided which ensures a connection between the tube (1) and the lug hook (4) when the hook is in the hauling position.

3. Trailer hook according to claim 2, characterized in that a spring-operated tap (12) is provided equipped with a safety catch (13) which hooks onto the ring nut (11) and prevents dirt and grime from entering the tube (1) when the lug hook (4) is removed, in addition to ensure that the ring nut (11) does not become unscrewed due to vibrations occuring during hauling.

4. Trailer hook according to claim 3, characterized in that the safety catch (13) consists of a spring-operated pin (14) housed in the ring nut (11) when in the safety position, wherein the pin inserts itself in a hole (16) located on the lug hook (4).

## Patentansprüche

1. Abnehmbarer Anhängerhaken mit einem Rohr (1), welches mittels mechanischer Einrichtungen an einem Fahrzeug befestigt ist, und mit einem Ansatzhaken (4), wobei an der Unterseite des Rohres (1) ein Kontaktträger (5) vorgesehen ist, welcher die Ausgänge hält zur Verbindung an das elektrische System des Fahrzeuges, und wobei darüber hinaus an dem Rohr (1) ein Kontaktträger (9) vorgesehen ist, der die Ausgänge hält für den Anschluß an das elektrische System des Anhängers,
**dadurch gekennzeichnet,**
daß innerhalb des Rohres (1) Führungsschlitze (2) vorgesehen sind, die am Ansatzhaken (4) Stifte (3) angeordnet sind derart, daß die Schlitze (2) und die Stifte (3) in Kombination als Bajonettverbindung wirken zwischen dem Ansatzhaken 4 und dem Rohr (1),
daß entlang der Seiten des Kontaktträgers (5) Nuten (7) vorgesehen sind, welche mit Hilfe speziell ausgebildeter Stifte an dem Rohr (1) eine zweite Bajonettverbindung für den Kontaktträger (5) bilden, und
daß eine Gegenfeder (8) positioniert ist zwischen der Unterseite des Rohres (1) und dem Kontaktträger (5).

2. Ansatzhaken gemäß Anspruch 1, dadurch gekennzeichnet, daß eine Ringmutter (11) vorgesehen ist zur Sicherstellung einer Verbindung zwischen dem Rohr (1) und dem Ansatzhaken (4), wenn der Haken sich in der Schlepp-Position befindet.

3. Ansatzhaken gemäß Anspruch 2, dadurch gekennzeichnet, daß eine unter Federdruck stehende Lasche (12) vorgesehen ist, die einen Sicherheitsriegel (13) trägt, welcher in die Ringmutter (11) eingreift und verhindert, daß Staub und Schmutz in das Rohr (1) eintritt, wenn der Ansatzhaken (4) abgenommen ist, und gleichzeitig sicherstellt, daß die Ringmutter (11) sich nicht löst aufgrund von Vibrationen, die während des Schleppens eintreten.

4. Ansatzhaken gemäß Anspruch 3, dadurch gekennzeichnet, daß der Sicherheitsriegel (13) aus einem unter Federdruck stehenden Stift (14) besteht, der in der Ringmutter (11) aufgenommen ist, wenn er sich in der Sicherheitsposition befindet, wobei der Stift selbst in eine Öffnung (16) eingreift, die an dem Ansatzhaken (4) angeordnet ist.

## Revendications

1. Crochet de remorquage amovible comprenant un tube (1) attaché par des organes mécaniques sur un véhicule et comprenant un crochet de traction (4), dans lequel un porte-contacts (5) est prévu au fond du tube (1), qui porte des sorties pour la connexion au système électrique du véhicule, et dans lequel est en outre prévu au niveau du tube (1) un porte-contacts (9) qui porte des sorties pour la connexion avec un système électrique de remorque,
caractérisé en ce que
à l'intérieur du tube (1) sont prévues des fentes de guidage (2) et sur le crochet de traction (4) sont prévues des tiges (3), de telle manière que les fentes (2) et les tiges (3) agissent en combinaison à la manière d'une liaison à baïonnette entre le crochet de traction (4) et le tube (1),
le long des bords du porte-contacts (5) sont prévues des gorges (7) qui définissent, au moyen de tiges de conception spéciale sur le tube (1), une deuxième liaison à baïonnette pour le porte-contacts (5), et
un contre-ressort (8) est positionné entre le fond du tube (1) et le porte-contacts (5).

2. Crochet de remorquage selon la revendication 1, caractérisé en ce qu'un écrou annulaire (11) est prévu pour assurer une connexion entre le tube (1) et le crochet de traction (4) lorsque le crochet est en position de remorquage.

3. Crochet de remorquage selon la revendication 2, caractérisé en ce qu'il est prévu un volet (12) actionné par un ressort est équipé d'un cran de sécurité (13) qui s'accroche sur l'écrou annulaire (11) et qui empêche aux saletés et à l'humidité de pénétrer dans le tube (1) lorsque le crochet de traction (4) est enlevé, et qui assure en plus que l'écrou annulaire (11) ne se dévisse pas en raison des vibrations qui se produisent pendant le remorquage.

4. Crochet de remorquage selon la revendication 3, caractérisé en ce que le cran de sécurité (13) est constitué par une tige (14) actionnée par un ressort et abritée dans l'écrou annulaire (11) lorsqu'il se trouve dans la position de sécurité dans laquelle la tige s'introduit d'elle-même dans un trou (16) situé sur le crochet de traction (4).
